Europäisches Patentamt

**European Patent Office**

Office européen des brevets

(19)

(11) Veröffentlichungsnummer: **0 051 710**
**B1**

(12) # EUROPÄISCHE PATENTSCHRIFT

(45) Veröffentlichungstag der Patentschrift:
**20.03.85**

(21) Anmeldenummer: **80810348.5**

(22) Anmeldetag: **12.11.80**

(51) Int. Cl.⁴: **D 06 N 7/00,** B 32 B 29/00,
B 32 B 5/00, B 32 B 3/28,
E 04 F 15/16

(54) **Verfahren zur Herstellung von Wand- und Fussbodenbelägen mit Reliefstruktur und Vorrichtung zur Durchführung des Verfahrens.**

(43) Veröffentlichungstag der Anmeldung:
**19.05.82 Patentblatt 82/20**

(45) Bekanntmachung des Hinweises auf die Patenterteilung:
**20.03.85 Patentblatt 85/12**

(84) Benannte Vertragsstaaten:
**BE CH DE FR GB LI NL**

(56) Entgegenhaltungen:
**CH - A - 437 191**
**DE - A - 1 635 595**
**DE - A - 2 617 333**
**FR - A - 2 393 897**
**GB - A - 1 096 737**
**US - A - 3 024 154**

(73) Patentinhaber: **FIDES TREUHAND GmbH, Hofaue 95,
D-5600 Wuppertal 1 (DE)**

(72) Erfinder: **Der Erfinder hat auf seine Nennung verzichtet**

(74) Vertreter: **Seehof, Michel et al, c/o AMMANN
PATENTANWAELTE AG BERN Schwarztorstrasse 31,
CH-3001 Bern (CH)**

EP 0 051 710 B1

## Beschreibung

Die vorliegende Erfindung bezieht sich auf ein Verfahren zur Herstellung von Wand- und Fussbodenbelägen mit Reliefstruktur, wobei die Trägerbahn geprägt und mit einem Kunststoffbelag versehen wird und auf eine Vorrichtung zur Durchführung des Verfahrens.

Beläge, beispielsweise Tapeten mit reliefartiger Struktur werden nach verschiedenen Verfahren hergestellt, indem sie entweder geprägt und gegebenenfalls verschiedenartig gefärbt werden oder indem ein Kunststoff, vorzugsweise ein schäumfähiger Kunststoff auf eine Trägerbahn aufgetragen wird.

Während es schon seit längerer Zeit eine Vielfalt von Prägeverfahren gibt, die sich im Prinzipiellen nicht stark voneinander unterscheiden, wurden in neuerer Zeit verschiedene andere Verfahren zur Erzielung von Reliefstrukturen entwickelt, wobei sich im wesentlichen zwei Verfahren durchgesetzt haben:

1. Die Trägerbahn wird vollflächig und gleichmässig mit einem schäumfähigen Kunststoff bedeckt. Dann wird dieses Material vorgeliert und anschliessend bedruckt, wobei der Druckfarbe chemische Mittel zugesetzt werden, welche das vollständige Aufschäumen beim endgültigen Geliervorgang entweder verhindern oder ermöglichen. Das ist das sogenannte chemische Prägen. In dieser Art werden Wand- und Bodenbeläge meistens hergestellt. Man kann aber auch den auf die Trägerbahn aufgebrachten Kunststoff vollkommen aufschäumen und dann gleich im Anschluss daran mit einer abgekühlten Prägewalze niederdrücken. Ein Mehrfarbendruck im Rapport ist dabei allerdings nicht möglich. Bei all diesen Verfahren ist das Materialgewicht des aufgetragenen Kunststoffes sehr gross, weil die Trägerbahn vollflächig mit Kunststoff bedeckt wird.

2. Der schäumfähige Kunststoff wird in einer dem Dessin zugeordneten Weise mehr oder weniger dick aufgetragen und dieser reliefartige Auftrag wird dann beim nachträglichen Aufschäumen zu einem hochstehenden Relief entfaltet. In diesem Falle ist der Materialauftrag geringer als beim vollflächigen Auftrag nach dem zuerst genannten Verfahren. Dieses Verfahren hat aber den Nachteil, dass bei starkem Aufschäumen das Relief ziemlich verschwommen ist. Ausserdem ist die Haftung des Schaumstoffes auf der Papieroberfläche gering, so dass der Wandbelag leicht zerstört werden kann. Wenn man dagegen ein stabileres – nicht so hoch aufschäumbares – Kunststoffmaterial verwendet, wird das Relief auch nicht so stark erhaben.

Aus der FR-A 2 393 897 ist auch bekannt, die Trägerbahn zu prägen und im gleichen Arbeitsgang gleichmässig mit einer Kunststoffschicht zu versehen. Dabei kann man jedoch nicht den Kunststoffauftrag an das Relief anpassen und es wird auch hier relativ viel Material verbraucht.

Aus der CH-A 437 181 schliesslich ist bekannt, eine Vorrichtung mit einer Gegendruckwalze und zwei ihr zugeordneten Druckwalzen zu verwenden, um eine durchsichtige Bahn zu formen und mit einer zweiten, an der Unterseite der ersten Bahn bedruckten zweiten Bahn zu vereinen, wobei jedoch die Anwendungsmöglichkeiten stark beschränkt sind.

Es ist demgegenüber Aufgabe der vorliegenden Erfindung, ein Verfahren zur Herstellung von Belägen mit Reliefstrukturen anzugeben, mit welchem man einen wesentlichen Anteil des schäumbaren Stoffes einsparen kann und das insbesondere bei hohen Strukturen eine bessere optische Wirkung erzielt und ausserdem eine grössere Auswahl in der Farbgebung ermöglicht. Diese Aufgabe wird durch das in den entsprechenden Patentansprüchen beschriebene Verfahren gelöst.

Die Erfindung wird nun im einzelnen anhand einer Zeichnung von Ausführungsbeispielen näher erläutert werden:

Fig. 1 zeigt schematisch ein erstes Ausführungsbeispiel einer Vorrichtung zur Durchführung des erfindungsgemässen Verfahrens,

Fig. 2 zeigt eine Ausschnittvergrösserung mit einer Ausführungsvariante,

die Fig. 3 und 4 zeigen Ausschnittvergrösserungen von Fig. 2,

Fig. 5 zeigt schematisch eine Anlage zur Herstellung von Belägen,

Fig. 6 zeigt eine Ausführungsvariante zur Anlage gemäss Fig. 5,

Fig. 7 zeigt schematisch, im Schnitt, einen mit der Vorrichtung von Fig. 2 hergestellten Belag,

Fig. 8 zeigt schematisch, im Schnitt, einen weiter verarbeiteten Belag.

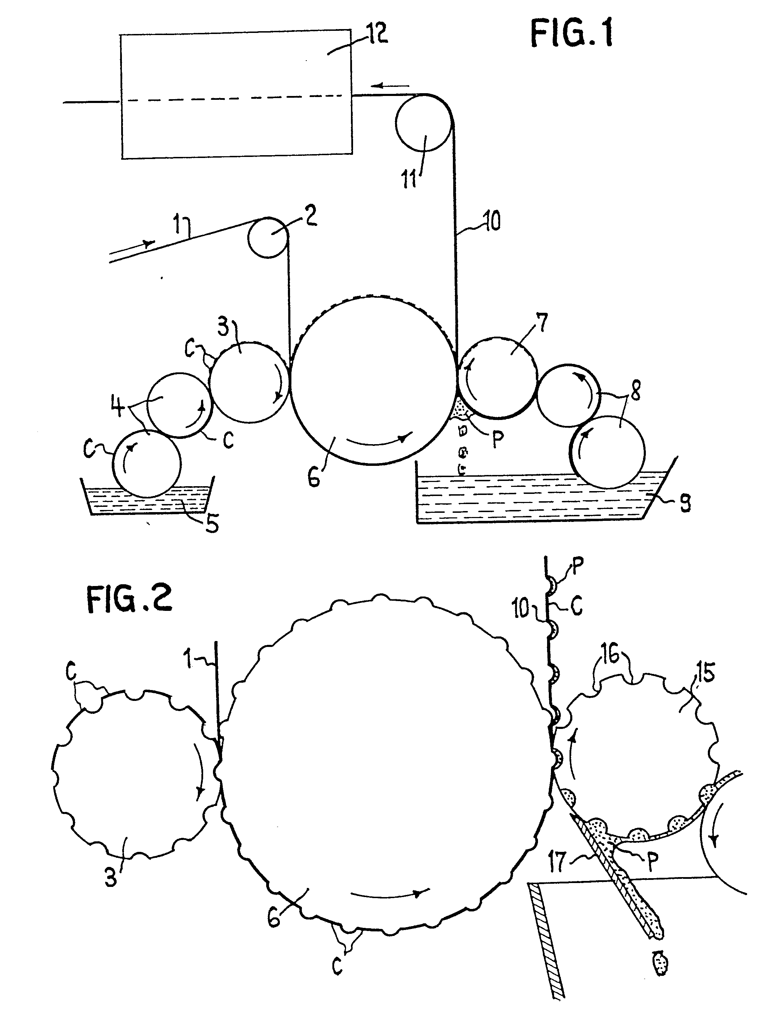

In Fig. 1 ist schematisch ein erfindungswesentlicher Teil einer Vorrichtung zum Herstellen einer Wandtapete oder eines Fussbodenbelages zu erkennen. Das Trägermaterial 1, beispielsweise Trägerpapier, wird über eine Umlenkrolle 2 der ersten Prägewalze 3 zugeführt, auf die mittels Farbwalzen 4 Farbe C aus einem Behälter 5 aufgebracht wird. Die Prägewalze 3 arbeitet mit einer Gegendruckwalze 6 zusammen, die meistens aus Hartpapier besteht und mit einem negativen Relief versehen ist. Auf der anderen Seite der Gegendruckwalze ist eine zweite Prägewalze 7 angeordnet, die bezüglich der ersten Prägewalze ein teilweise abgeändertes Relief aufweist. Dieser zweiten Prägewalze 7 wird über Walzen 8 ein Kunststoffauftrag P, beispielsweise aus einem PVC-Plastisol oder auf Polyurethanbasis zugeführt, der sich in einem Behälter 9 befindet, wobei der nicht verwendete Kunststoff in den Behälter zurücktropft. Von der zweiten Prägewalze 7 gelangt das geprägte und beschichtete Papier 10 über eine Umlenkrolle 11 durch den Gelierkanal 12.

Man ersieht aus der Vorrichtung gemäss Fig. 1 folgendes Verfahrensprinzip: das Trägerpapier 1 wird zwischen der ersten Prägewalze 3 und der genau entsprechenden Gegendruckwalze 6 reliefartig geprägt und vorzugsweise bedruckt. Nach dem Prägevorgang liegt das Papier im geprägten Zustand auf der Gegendruckwalze. Die zweite Prägewalze 7 kann ein Relief haben, das mit demjenigen der ersten Prägewalze identisch ist oder es kann in gewissen Partien von dieser Form abweichen. Die zweite Prägewalze 7 wird gegen die Gegendruckwalze 6 gepresst, während sich zwischen diesen beiden Walzen das geprägte Papier befindet. Der Zweck der zweiten Prägewalze ist jedoch nicht ein nochmaliges Prägen des Papiers, sonders die zweite Prägewalze ist dazu vorgesehen, um auf dem geprägten Papier eine ganz oder partielle Beschichtung mit einem PVC-Plastisol-Polymer oder -Copolymer oder Polyurethan oder dergleichen durchzuführen. Beim Farbauftragen durch die Walzen 4 werden an den erhabenen Stellen der Prägewalze 3 eine oder mehrere Farben aufgetragen, die dann beim Prägevorgang die tief eingeprägten Stellen des Papiers mit diesen Farben bedrucken. Das PVC-Plastisol wird mit der zweiten Prägewalze 7 derart aufgetragen, dass diese Prägewalze mit Hilfe der Übertragungswalzen 8 voll mit Plastisol bedeckt wird, welches dann zwischen Prägewalze und Gegendruckwalze auf das dazwischenleigende geprägte Papier übertragen wird, wobei die Übertragung des Plastisols auf die geprägte Trägerbahn auf verschiedene Arten erfolgen kann.

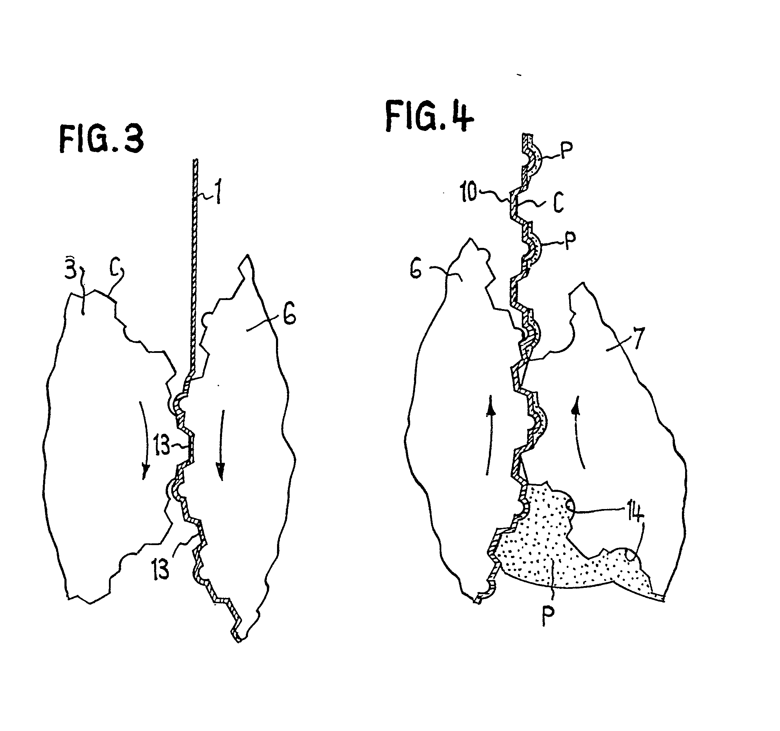

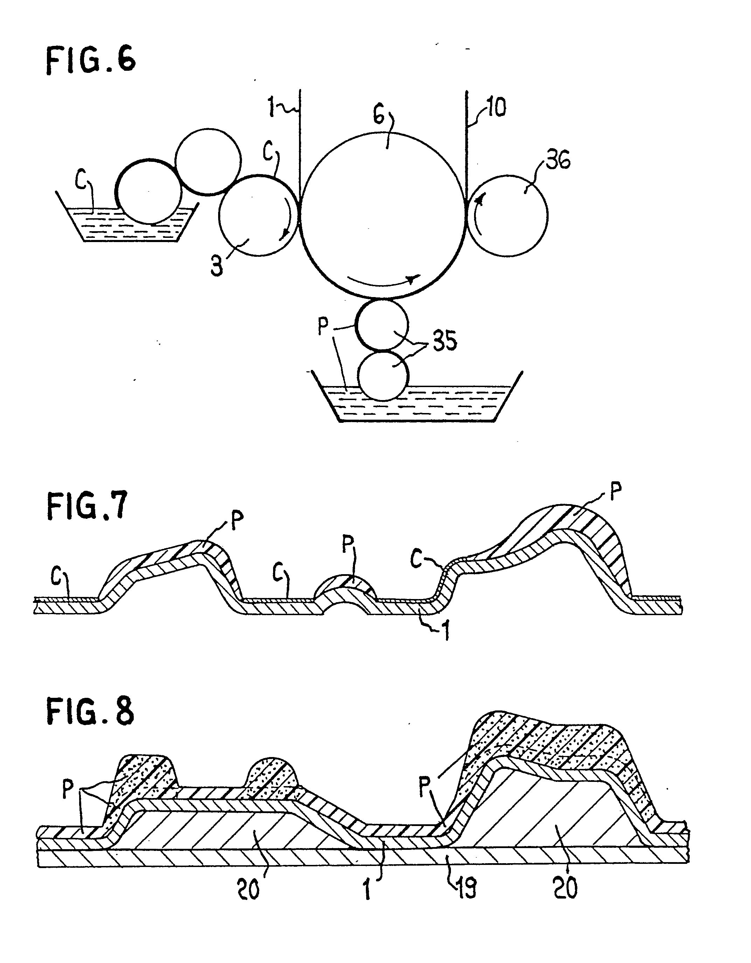

In einer ersten Ausführungsvariante gemäss Fig. 4 ist das Relief der zweite Prägewalze 7 nur teilweise mit demjenigen der ersten Prägewalze 3 identisch. Dabei ist das Relief der zweiten Prägewalze derart hergestellt, dass das Plastisol an den auf dem Papier tief liegenden Stellen 13 vollständig weggequetscht wird, wodurch die an diesen Stellen aufgedruckten Farben C wieder sichtbar werden, während die zweite Prägewalze an den auf dem Papier hoch stehenden Stellen 14 tiefer gearbeitet ist, wodurch in dem entstehenden Zwischenraum zwischen Papier und zweiter Prägewalze Plastisol in einer der Tiefe des Reliefs der zweiten Prägewalze entsprechenden Stärke auf dem Papier haften bleibt. Dadurch ist es möglich, das in das Papier geprägte Relief zu verstärken, zu vergrössern oder bestimmte gewünschte Muster hervorzuheben, wie das aus Fig. 7 hervorgeht.

Bei der Ausführungsvariante gemäss Fig. 2 ist vorgesehen, dass das Plastisol nur an bestimmten Stellen aufgetragen wird (siehe Fig. 7). Die zweite Prägewalze 15 enthält musterartige Vertiefungen 16 und das überschüssige Plastisol wird mit einem Rakelmesser 17 abgestrichen, so dass nur das in den Vertiefungen 16 befindliche Plastisol auf das Papier übertragen wird.

Wie aus obigen Ausführungen und aus den schematischen Zeichnungen hervorgeht ist es stets möglich, im Rapport, das heisst im Verhältnis des Prägemusters, die verschiedenen Farben zu drucken und den Schaumstoff aufzubringen, zu formen und gegebenenfalls farbig zu bedrukken, oder gezielt Treibmittel zuzugeben (Fig. 8).

Es besteht ausserdem die Möglichkeit, den Kunststoff nach dem Vorgelieren gezielt an bestimmten Stellen mit Treibzusätzen zu versehen, die es erlauben, ihn durch starkes Erhitzen dort zum Aufschäumen zu bringen, so dass er beispielsweise im Verhältnis von 3:1 expandiert und im Volumen vergrössert wird (siehe Fig. 8), oder man kann Mittel zusetzen, die das Aufschäumen verhindern.

Insbesondere bei hohen Reliefs kann es vorteilhaft sein, die oben beschriebenen Bahnen mit einer glatten Papierbahn 19 zu kaschieren und die entstandenen Hohlräume mit einer Spachtelmasse oder einem Schaumstoff 20 auszufüllen. Dieses Verfahren eignet sich besonders gut für die Herstellung von hochbeanspruchten Belägen, wie Fussbodenbeläge.

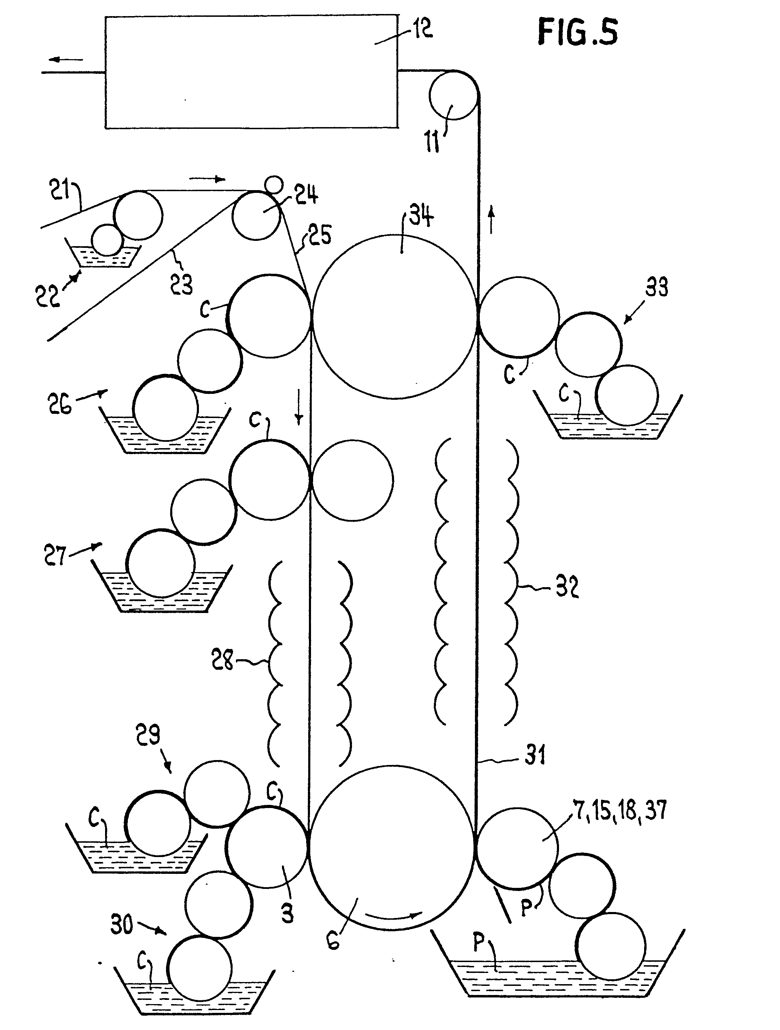

Nachfolgend werden anhand der Fig. 5 und 6 die wesentlichsten Verfahrensschritte zur Herstellung von reliefartigen und fabrig bedruckten Belägen erläutert.

Zunächst wird eine Trägerbahn 21 bei einer Leimstation 22 mit Leim versehen, mit einer zweiten Trägerbahn 23 zusammengebracht und durch die Rollen 24 zusammengepresst, um die eigentliche Trägerbahn 25 zu ergeben. Diese Trägerbahn 25 wird in einem ersten 26 und zweiten 27 Vordruckfarbwerk bedruckt und durch eine Infrarotheizung 28 geschickt, um den Leim für das nachfolgende Prägen anzutrocknen. An der Prägewalze 3 sind ein erstes 29 und ein zweites 30 Prägefarbwerk angeordnet, welche die Prägewalze 3 an ihren erhabenen Stellen färben. Nach dem Prägen durch die erste Prägewalze 3 und Gegendruckwalze 6 gelangt die Bahn zur zweiten Prägewalze 7, 15 oder 18, oder Siebdruckwerk 37, womit der Kunststoff aufgetragen und geformt wird. Als Kunststoff kann ein ähnlich der DE-AS 2 847 642 hergestelltes schaumfähiges Plastisol verwendet werden. Die beschichtete Bahn 31 gelangt durch eine zweite Infrarotheizung 32 zum Vorgelieren, um das Nachdrucken zu ermöglichen. Dies geschieht im Nachdruckfarbwerk 33, wobei das erste Vordruckfarbwerk 26 und das Nachdruckfarbwerk 33 die gleiche Gegendruckwalze 34 benötigen können. Über die Umlenkrolle 11 gelangt die Bahn in den Gelierkanal 12, in welchem auch das Schäumen erfolgt. Falls notwendig wird, wie vorher erwähnt, ein glattes Papier auf die Unterseite aufkaschiert und die Zwischenräume werden ausgefüllt. In der Regel werden die Bahnen in Form von Rollen oder von Platten hergestellt.

Wie bereits erwähnt, sind sämtliche Druck- und Prägewerke derart angeordnet und mit geeigneten Mitteln wie Messonden und Stellapparate versehen, dass sich alle Präge- und Druckwalzen stets mustergenau, d.h. im Rapport befinden, wodurch sich genaue und ästhetisch voll befriedigende Muster erstellen lassen.

Es ist in einer weiteren Ausführungsvariante gemäss Fig. 6 auch möglich, das Plastisol mittels Walzen 35 auf die geprägte Bahn aufzutragen und dann mittels der zweiten Prägewalze 36 zu formen, die irgendeines der vorgehend beschriebenen Reliefs aufweisen kann.

Je nach Art der Trägerbahn und weiterer Kaschierung ergeben sich Wand- und Fussbodenbeläge, die eine Prägung der Trägerbahn aufweisen und in einem bestimmten Verhältnis zum Prägemuster teilweise oder gänzlich mit einem Kunststoffauftrag versehen sind und verschiedene Farbmuster aufweisen, die auch in einem bestimmten Verhältnis zum Prägemuster angeordnet sind.

Durch die Kombination von Prägung der Trägerbahn und gegebenenfalls geschäumten Auftrag ergibt sich eine wesentliche Einsparung an Kunststoff und dadurch, dass das Verfahren in einem Arbeitsgang durchgeführt wird, einmal die Möglichkeit, sämtliche Muster im Rapport auszuführen und eine relativ einfache Anlage zu realisieren.

**Patentansprüche**

1. Verfahren zur Herstellung von Wand- und Fussbodenbelägen mit Reliefstruktur, wobei die Trägerbahn geprägt und mit einem Kunststoffbelag versehen wird, dadurch gekennzeichnet, dass die Trägerbahn in einem Arbeitsgang mittels einer ersten Prägewalze und einer Gegendruckwalze geprägt und im Rapport mit dem geprägten Muster stellenweise mit einem fliessfähigen Kunststoffauftrag versehen wird, wobei der Kunststoffauftrag mittels einer zweiten Prägewalze, die mit der Gegendruckwalze der ersten Prägewalze zusammenarbeitet, hauptsächlich an den auf der Trägerbahn erhabenen Stellen geformt wird.

2. Verfahren nach Anspruch 1, dadurch gekennzeichnet, dass der Kunststoffauftrag der zweiten Prägewalze über Walzen zugeführt und durch die zweite Prägewalze auf die Trägerbahn aufgebracht und an den in der Trägerbahn tiefen Stellen abgequetscht wird.

3. Verfahren nach Anspruch 2, dadurch gekennzeichnet, dass der überschüssige Kunststoffauftrag auf der zweiten Prägewalze vor dem Auftragen mittels eines Rakels abgestrichen wird, um ihn an den auf der Trägerbahn erhabenen Stellen aufzutragen.

4. Verfahren nach Anspruch 1, dadurch gekennzeichnet, dass der Kunststoffauftrag mittels Walzen vor der zweiten Prägewalze auf die Trägerbahn aufgebracht wird.

5. Verfahren nach einem der Ansprüche 1 bis 4, dadurch gekennzeichnet, dass die Trägerbahn vor dem Prägen mit Farben bedruckt wird.

6. Verfahren nach einem der Ansprüche 1 bis 5, dadurch gekennzeichnet, dass die geprägte und mit dem Kunststoffauftrag versehene Bahn anschliessend vorgeliert und mit Farben bedruckt wird.

7. Verfahren nach einem der Ansprüche 1 bis 6, dadurch gekennzeichnet, dass zwei Trägerbahnen aufeinander kaschiert werden und die so gebildete Trägerbahn vor dem Prägen erwärmt wird.

8. Verfahren nach einem der Ansprüche 1 bis 7, dadurch gekennzeichnet, dass die Trägerbahn auf ihrer Unterseite mit glattem Papier kaschiert wird und die Zwischenräume mit einer Spachtelmasse oder Schaumstoff aufgefüllt werden.

9. Verfahren nach einem der Ansprüche 1 bis 8, dadurch gekennzeichnet, dass ein Kunststoffauftrag mit Treibmittel verwendet wird.

10. Vorrichtung zur Durchführung des Verfahrens nach den Ansprüchen 1 bis 9, dadurch gekennzeichnet, dass sie eine Gegendruckwalze (6) und zwei ihr zugeordnete Prägewalzen (3; 7, 15, 18, 31, 36) aufweist, wobei die zweite Prägewalze (7, 15, 18, 31, 36) derart ausgebildet ist und auf sie wirkende Steuermittel vorhanden sind, um mit ihr im Rapport mit der ersten Prägewalze (3) stellenweise den Kunststoffauftrag (P) zu formen.

11. Vorrichtung nach Anspruch 10, dadurch gekennzeichnet, dass der zweiten Prägewalze (7, 15, 18) Walzen (8) zur Zuführung des Kunststoffauftrages (P) zugeordnet sind.

12. Vorrichtung nach Anspruch 11, dadurch gekennzeichnet, dass das Relief der zweiten Prägewalze (7) von demjenigen der ersten Prägewalze (3) abweicht, wobei es derart beschaffen ist, dass der Kunststoffauftrag (P) an den in der Trägerbahn (1, 25) tief liegenden Stellen weggequetscht wird und die Vertiefungen tiefer gearbeitet sind.

13. Vorrichtung nach Anspruch 11, dadurch gekennzeichnet, dass die zweite Prägewalze (15) in Muster angeordnete Vertiefungen (16) aufweist und ihr ein Rakelmesser (17) zugeordnet ist, um überschüssigen Kunststoffauftrag vor dem Auftragen abzustreifen.

14. Vorrichtung nach Anspruch 10, dadurch gekennzeichnet, dass vor der zweiten Prägewalze (36) Walzen (35) zum Auftragen des Kunststoffauftrages auf die Trägerbahn angeordnet sind.

15. Vorrichtung nach einem der Ansprüche 10 bis 14, dadurch gekennzeichnet, dass sie eine Leimstation (22) zum Kaschieren einer Trägerbahn (25), Vordruckfarbwerke (26, 27), gegebenenfalls eine erste Heizung (28), zwei Prägefarbwerke (29, 30), eine Heizung (32) zum Vorgelieren, ein Nachdruckfarbwerk (33) sowie einen Gelierkanal (12) aufweist.

16. Vorrichtung nach einem der Ansprüche 10 bis 15, dadurch gekennzeichnet, dass sie weitere Steuermittel aufweist, um das Bedrucken und Formen sämtlicher Muster eines Belages in einem bestimten Verhältnis zum Prägemuster zu gewährleisten.

**Revendications**

1. Procédé de fabrication de revêtement de parois ou de sol ayant un relief, dans lequel la feuille support est gaufrée et pourvue d'un revêtement en matière synthétique, caractérisé en ce qu'en une opération, la feuille support est gaufrée à l'aide d'un premier cylindre de gaufrage et d'un cylindre d'appui et pourvue par endroits d'un enduit de matière synthétique fluide dans un rapport avec la configuration gaufrée, l'enduit de matière synthétique étant principalement formé aux endroits en relief de la feuille support à l'aide d'un second cylindre de gaufrage coopérant avec le cylindre d'appui du premier cylindre de gaufrage.

2. Procédé selon la revendication 1, caractérisé en ce que l'enduit de matière synthétique est apporté au second cylindre de gaufrage par des rouleaux et appliqué par le second cylindre de gaufrage sur la feuille support et qu'il est éliminé par écrasement des creux de la feuille support.

3. Procédé selon la revendication 2, caractérisé en ce que l'enduit de matière synthétique excédentaire sur le second cylindre de gaufrage est enlevé par un racloir avant son application, afin de l'appliquer sur les parties en relief de la feuille support.

4. Procédé selon la revendication 1, caractérisé en ce que l'enduit de matière synthétique est appliqué par des rouleaux sur la feuille support avant le second cylindre de gaufrage.

5. Procédé selon l'une des revendications 1 à 4, caractérisé en ce que la feuille support est munie d'une impression en couleurs avant le gaufrage.

6. Procédé selon l'une des revendications 1 à 5, caractérisé en ce que la feuille support gaufrée et pourvue de l'enduit de matière synthétique est ensuite prégélifiée et pourvue d'un impression en couleurs.

7. Procédé selon l'une des revendications 1 à 6, caractérisé en ce que deux feuilles support sont contrecollées l'une sur l'autre et que la feuille support ainsi formée est chauffée avant le gaufrage.

8. Procédé selon l'une des revendications 1 à 7, caractérisé en ce que le feuille support est contrecollées à sa partie inférieure avec du papier lisse et en ce que les espaces intermédiaires sont remplis d'un mastic ou d'un produit alvéolaire.

9. Procédé selon l'une des revendications 1 à 8, caractérisé en ce qu'un enduit de matière synthétique avec un produit moussant est utilisé.

10. Dispositif pour la mise en œuvre du procédé selon l'une des revendications 1 à 9, caractérisé en ce qu'il comprend un cylindre d'appui (6) et deux cylindres de gaufrage (3; 7, 15, 18, 31, 36) associés à ce dernier, le second cylindre de gaufrage étant de telle configuration et des moyens de commande agissant sur lui étant présents de manière que l'enduit de matière synthétique (P) est formé avec lui en des endroits en rapport avec le premier cylindre de gaufrage (3).

11. Dispositif selon la revendication 10, caractérisé en ce que des rouleaux (8) sont associés au second cylindre de gaufrage (7, 15, 18) pour l'apport de l'enduit de matière synthétique (P).

12. Dispositif selon la revendication 11, caractérisé en ce que le relief du second cylindre de gaufrage (7) diffère de celui du premier cylindre de gaufrage (3), sa configuration étant telle que l'enduit de matière synthétique (P) est éliminé par écrasement dans les creux de la feuille support (1, 25) et que les creux sont rendus plus profonds.

13. Dispositif selon la revendication 11, caractérisé en ce que la configuration du second cylindre de gaufrge (15) comprend des creux et qu'un racloir en forme de couteau (17) lui est associé afin d'éliminer l'enduit de matière synthétique excédentaire avant son application.

14. Dispositif selon la revendication 10, caractérisé en ce que des rouleaux (35) pour l'application de l'enduit de matière synthétique sur la feuille support sont disposés devant le second cylindre de gaufrage (36).

15. Dispositif selon l'une des revendications 10 à 14, caractérisé en ce qu'il comprend une station de collage (22) pour le contrecollage d'une feuille support (25), un mécanisme de préimpression (26, 27) pour une impression initiale, le cas échéant un premier chauffage (28), deux mécanismes de gaufrage et d'impression (29, 30), un chauffage (32) pour prégélifier, un mécanisme de surimpression (33) ainsi qu'un canal de gélification (12).

16. Dispositif selon l'une des revendications 10 à 15, caractérisé en ce qu'il comprend d'autres moyens de commande pour garantir l'impression et la mise en forme de toutes les configurations d'un revêtement dans un rapport déterminé avec la configuration gaufrée.

**Claims**

1. Process for preparing wall and floor coverings with relief structure in which the backing strip is embossed and provided with a coating of plastics material, characterized in that in one operation the backing strip is embossed by means of a first embossing roller and a counterpressure roller and provided in parts with a fluid coating of plastics material in a pattern repeat with the embossed configuration, the coating of plastics material being principally formed on the projecting portions of the backing strip by means of a second embossing roller cooperating with the counterpressure roller of the first embossing roller.

2. Process according to claim 1, characterized in that the coating of plastics material is supplied to the second embossing roller by rollers and applied by the second embossing roller on the backing strip, said coating of plastics material being squeezed out of the depressions of the backing strip.

3. Process according to claim 2, characterized in that the surplus coating of plastics material on the second embossing roller is scraped off by a scraper before its application, in order to apply it on the projecting portions of the backing strip.

4. Process according to claim 1, characterized in that the coating of plastics material is applied by rollers on the backing strip in front of the second embossing roller.

5. Process according to one of the claims 1 to 4, characterized in that the backing strip is printed with colours before it is embossed.

6. Process according to one of the claims 1 to 4, characterized in that the embossed backing strip provided with the coating of plastics materi-

al is finally pre-cured and overprinted with colours.

7. Process according to one of the claims 1 to 6, characterized in that two backing strips are glued together and same are heated before being embossed.

8. Process according to one of the claims 1 to 7, characterized in that the backing strip is glued at its underside with a smooth paper and wherein the intermediate spaces are filled with a filler or foam.

9. Process according to one of the claims 1 to 8, characterized in that a coating of plastics material with a foaming agent is utilized.

10. Device for carrying out the process according to one of the claims 1 to 9, comprising a counterpressure roller (6) and two embossing rollers (3; 7, 15, 18, 31, 36) associated therewith, the second embossing roller being of such configuration and driving means acting upon it being present that the coating of plastics material (P) is formed with the second embossing roller at parts in pattern repeat with the first embossing roller (3).

11. Device according to claim 10, characterized in that rollers (8) are associated to the second embossing roller (7, 15, 18) for supplying the coating of plastics material (P).

12. Device according to claim 11, characterized in that the relief of the second embossing roller (7) differs from the one of the first embossing roller (3), its configuration being such that the coating of plastics material (P) is squeezed off the depressions of the backing strip (1, 25) and that the depressions are made deeper.

13. Device according to claim 11, characterized in that the configuration of the second embossing roller (15) comprises depressions and in that a knife scraper (17) is associated to it for eliminating the surplus coating of plastics material before its application.

14. Device according to claim 10, characterized in that rollers (35) for the application of the coating of plastics material on the backing strip are disposed before the second embossing roller (36).

15. Device according to one of the claims 10 to 14, characterized in that it comprises a glueing station (22) for glueing of a backing strip (25), a pre-printing unit (26, 27) for an initial printing, as the case may be a first heater (28), two embossing and colouring units (29, 30), a heater (32) for pre-curing, an overprinting unit (33) as well as a curing chamber (12).

16. Device according to one of the claims 10 to 15, characterized in that it comprises other driving means in order to guarantee the printing and the forming of all configurations of a coating in a predetermined pattern repeat with the embossed configuration.

# FIG.1

# FIG.2

# FIG.3

# FIG.4

0 051 710

FIG.5

FIG.6

FIG.7

FIG.8